# EUROPÄISCHE PATENTANMELDUNG

(11) **EP 2 423 553 A2**
(43) Veröffentlichungstag der Anmeldung: **29.02.2012**
(21) Anmeldenummer: 11005195.0
(22) Anmeldetag: 27.06.2011
(51) Int. Cl.: F16L 33/08

(54) **Schlauchschelle mit einer Spannschraube, Spannschraube und Werkzeug zum Antreiben der Spannschraube**

(30) Priorität: 28.08.2010 DE 102010035755
(71) Anmelder: NORMA Germany GmbH, 63477 Maintal (DE)
(72) Erfinder: Stoll, Viktor, 63538 Grosskrotzenburg (DE); Krauß, Mathias, 61130 Nidderau (DE)
(74) Vertreter: Knoblauch, Andreas

(57) **Zusammenfassung**

Die Erfindung betrifft eine Schlauchschelle (1) mit einem Schellenband (2) und einem Gehäuse (3), in dem eine Spannschraube (4) angeordnet ist, die einen Schraubenkopf (5) und einen Gewindeschaft (6) aufweist. Ferner betrifft die Erfindung eine derartige Spannschraube (4) und ein entsprechendes Werkzeug (11) zum Antreiben der Spannschraube (4).

Um eine ungewollte Manipulation der Schlauchschelle zu verhindern, weist der Schraubenkopf (5) eine vom Gewindeschaft (6) abgewandte, konvex gewölbte Oberfläche (8) auf, in der mindestens drei Einformungen (9) vorgesehen sind.

## Beschreibung

Die Erfindung betrifft eine Schlauchschelle mit einem Schellenband und einem Gehäuse, in dem eine Spannschraube angeordnet ist, die einen Schraubenkopf und einen Gewindeschaft aufweist. Ferner betrifft die Erfindung eine Spannschraube, insbesondere für eine derartige Schlauchschelle, die einen Schraubenkopf und einen Gewindeschaft aufweist. Die Erfindung betrifft auch ein Werkzeug zum Spannen einer derartigen Schlauchschelle und zum Antreiben der Spannschraube.

Schlauchschellen werden in vielen Bereichen der Technik eingesetzt und dienen beispielsweise dazu, Schläuche auf Anschlussstutzen zu verspannen. Das Spannen der Schlauchschellen geschieht dabei häufig dadurch, dass eine Spannschraube, die in einem Gehäuse angeordnet ist, das an einem Ende des Schellenbands befestigt ist, mit einem Gewinde zusammenwirkt, das auf der Außenseite des Schellenbandes zumindest im Bereich des anderen Endes in dem Schellenband ausgebildet ist. Durch Einschrauben der Spannschraube wird das freie Ende des Schellenbandes in das Gehäuse hineingezogen, wodurch sich der Durchmesser der Schlauchschelle verringert. Derartige Schlauchschellen sind allgemein bekannt.

In verschiedenen Anwendungsbereichen, beispielsweise im Automobilbau oder in öffentlichen Gebäuden, ist es erwünscht, dass eine Manipulation und insbesondere ein Lösen der Schlauchschelle verhindert werden. Bekannte Lösungen sehen dafür vor, den Schraubenkopf der Schlauchschelle nicht wie bei einer üblichen Schraube auszubilden, also mit einem Schlitz oder Kreuzschlitz, sondern mit einem Innensechskant oder Innenvielzahn, wobei gegebenenfalls ein zusätzlicher Pin im Zentrum des Innenvielzahns vorgesehen werden kann. Ohne das erforderliche, speziell abgestimmte Werkzeug ist damit ein Lösen der Schlauchsche-lle erschwert. Allerdings ist es vielfach möglich, mit einem Schraubenzieher oder einer Zange die Spannschraube zu drehen und damit die Schlauchschelle zu manipulieren.

Eine andere Lösung sieht einen Abreißkopf für die Spannschraube vor, der bei Erreichen eines vorbestimmten Drehmoments beim Spannen der Schlauchschelle abreißt. Ein Herausschrauben der Spannschraube und ein Lösen der Schlauchschelle sind dann nicht mehr möglich. Diese Lösung ist zwar sehr sicher gegen Manipulation, hat aber den Nachteil, dass der abgerissene Schraubenkopf unkontrolliert abfällt. Dies kann zu einer Blockade oder zumindest der Beeinträchtigung der Funktion umgebener Bauteile führen.

Der Erfindung liegt nun die Aufgabe zugrunde, die Manipulation von Spannschrauben zu erschweren.

Diese Aufgabe wird erfindungsgemäß bei einer Schlauchschelle der eingangs genannten Art dadurch gelöst, dass der Schraubenkopf eine vom Gewindeschaft abgewandte, konvex gewölbte Oberfläche aufweist, in der mindestens drei Einformungen vorgesehen sind.

Durch eine derartige Ausbildung des Schraubenkopfes ist ein Antreiben der Spannschraube nur mit einem Spezialwerkzeug möglich. Durch die konvex gewölbte Oberfläche des Schraubenkopfes, der also linsenförmig ausgebildet ist und dabei eine kreisförmige Grundfläche aufweist, ist ein Fassen des Schraubenkopfes mit einer Zange sehr schwierig. Die Einformungen sind außen ausgebildet, also entlang des Umfangs des Schraubenkopfes verteilt, und befinden sich damit alle radial außerhalb einer Drehachse der Spannschraube. Die Verwendung eines handelsüblichen Schraubenziehers zum Öffnen der Spannschraube ist daher nicht möglich. Damit wird eine Schlauchschelle bereitgestellt, die sicher gegen Manipulation ist. Gleichzeitig kann die konvex gewölbte Oberfläche des Schraubenkopfes dazu ausgenutzt werden, ein Werkzeug während des Aufsetzens auf den Schraubenkopf zu zentrieren, so dass auch die Handhabung bzw. das Handling der Schlauchschelle vereinfacht wird.

Vorzugsweise ist ein Zentrum der Oberfläche glatt ausgebildet. Dieses Zentrum befindet sich dabei auf der Rotationsachse der Spannschraube. Wenn dieses Zentrum glatt ausgebildet ist, ist es nicht möglich, dort mit einem Schraubenzieher oder einem ähnlichen Werkzeug anzugreifen. Gleichzeitig wird sichergestellt, dass alle Einformungen radial außerhalb der Rotationsachse angeordnet sind.

Bevorzugterweise verlaufen die Einformungen radial. Die Einformungen können also gleichmäßig oder ungleichmäßig über einen Umfang des Schraubenkopfes verteilt sein, wobei sie radial verlaufen, also radial nach außen offen sind. Die Einformungen verlaufen sozusagen strahlenförmig radial nach außen.

Vorzugsweise sind die Einformungen sternförmig angeordnet, wobei sie insbesondere gleiche Abstände zueinander aufweisen. Der Schraubenkopf ist dann also rotationssymmetrisch ausgebildet, wodurch das Aufsetzen eines Werkzeugs und damit das Handling der Schlauchschelle vereinfacht werden, da das Werkzeug keine besonderen Drehwinkel gegenüber der Spannschraube aufweisen muss.

In einer vorteilhaften Ausgestaltung erweitern sich die Einformungen konisch nach außen. Die Einformungen weisen also einen relativ schmalen Grund und eine relativ große Öffnungsweite auf. Der Boden kann dabei als Sekante ausgebildet sein, der an zwei Stellen, nämlich den radialen Enden der Einformung, die Oberfläche des Schraubenkopfes schneidet. An den Enden können die Einformungen dabei relativ spitz zusammenlaufen. Durch diese konische Ausgestaltung der Einformungen ist eine Auswinklung des Werkzeugs gegenüber der Spannschraube möglich, also eine Winkelabweichung zwischen der Drehachse des Werkzeugs und der Rotationsachse der Spannschraube. Dies erleichtert insbesondere bei engen Bauräumen das Handling der Schlauchschelle.

Die Aufgabe wird auch durch eine Spannschraube der eingangs genannten Art dadurch gelöst, dass der Schraubenkopf eine vom Gewindeschaft abgewandte, konvex gewölbte Oberfläche aufweist, in der mindestens drei Einformungen vorgesehen sind.

Durch die konvex gewölbte Oberfläche des Schraubenkopfes, also eine linsenförmige Ausbildung, ist es nahezu unmöglich, den Schraubenkopf mit einer Zange zu erfassen und zu drehen. Durch das Vorsehen der mindestens drei Einformungen, die radial außerhalb einer Rotationsachse liegen, ist mit einem entsprechend ausgebildeten Werkzeug ein Formschluss herstellbar, so dass ein Antreiben der Spannschraube problemlos möglich ist. Mit herkömmlichen Werkzeugen wie eine Zange oder einen Schraubenzieher ist hingegen ein Antreiben der Spannschraube sehr schwierig bis unmöglich. Damit ist eine Manipulation der Spannschraube nahezu ausgeschlossen. Vorzugsweise ist ein Zentrum der Oberfläche glatt ausgebildet. Das Zentrum der Oberfläche liegt auf der Rotationsachse der Spannschraube. Die Einformungen sind also alle radial zur Rotationsachse beabstandet. Selbst wenn durch einen Schraubenzieher in eine der Einformungen eingegriffen wird, ist eine Bewegung der Spannschraube kaum möglich. Ein Angriff auf der Rotationsachse, wie bei Schrauben üblich, wird durch die im Zentrum glatte Oberfläche des Schraubenkopfes verhindert.

Bevorzugterweise sind die Einformungen sternförmig angeordnet, wobei sie insbesondere gleiche Abstände zueinander aufweisen. Die Einformungen sind also entlang des Umfangs des Schraubenkopfes verteilt angeordnet. Daher können sie radial nach außen verlaufen, also nach außen offen sein. Wenn die Abstände zwischen den Einformungen nicht gleich sind, erhöht sich die mögliche Vielfalt unterschiedlicher Spannschrauben bzw. Schraubenköpfe. Eine gleichmäßige Anordnung der Einformungen, also wenn die Abstände zwischen benachbarten Einformungen immer gleich sind, hat jedoch den Vorteil, dass die winkelmäßige Ausrichtung des Werkzeugs beim Aufsetzen auf den Schraubenkopf weniger wichtig ist. Dadurch vereinfacht sich also das Handling der Spannschraube.

Bevorzugterweise erweitern sich die Einformungen konisch nach außen. Ein Grund bzw. Boden der Einformungen ist also schmaler ausgebildet als eine Öffnungsweite, wobei radiale Enden der Einformung spitz zulaufen können. Durch diese Ausgestaltung ist ein Antreiben der Spannschraube auch dann möglich, wenn eine Drehachse des Werkzeugs in einem Winkel zur Rotationsachse der Spannschraube verläuft. Das Handling der Spannschraube vereinfacht sich dadurch.

Die Aufgabe wird auch durch ein Werkzeug der eingangs genannten Art dadurch gelöst, dass das Werkzeug eine Aufnahme mit einem zu einer Stirnseite hin offenen Innenraum aufweist, in dem mindestens drei radial nach innen gerichtete Vorsprünge angeordnet sind.

Der Innenraum ist dabei als Hohlzylinder mit einer kreisförmigen Grundfläche ausgebildet. Dieser zu einer Stirnseite hin offene Innenraum zentriert sich dadurch beim Aufsetzen auf die konvex gewölbte Oberfläche des Schraubenkopfes der Spannschraube selbständig. Die Anzahl der nach innen gerichteten Vorsprünge sollte dabei der Anzahl der Einformungen entsprechen und an entsprechenden Stellen angeordnet sein, so dass eine formschlüssige Verbindung zwischen den Vorsprüngen und den Einformungen erfolgen kann.

Dabei ist besonders bevorzugt, dass ein Innendurchmesser des Innenraums auf einen Außendurchmesser des Schraubenkopfes und eine Anzahl und eine Form der Vorsprünge an einer Anzahl und eine Form der Einformungen des Schraubenkopfes angepasst sind. Durch die Anpassung des Innendurchmessers des Innenraums auf einen Außendurchmesser des Schraubenkopfes erfolgt eine relativ gute Zentrierung des Werkzeugs auf der Spannschraube. Durch die Anpassung der Anzahl und Form der Vorsprünge an Anzahl und Form der Einformungen werden relativ gro-βe Kontaktflächen zwischen Werkzeug und Spannschraube erreicht, so dass relativ hohe Kräfte übertragbar sind. Eine Beschädigung des Schraubenkopfes durch das Werkzeug ist dadurch auch bei hohen Drehmomenten relativ selten.

In einer bevorzugten Ausführungsform verlaufen radial innen liegende Außenkanten der Vorsprünge parallel zueinander. Die Außenkanten der Vorsprünge können dabei auch parallel zu einer Außenseite der Aufnahme verlaufen. Dadurch ist eine relativ einfache Herstellung der Aufnahme bzw. des Werkzeugs möglich. Bei einer konischen Ausgestaltung der Einformungen ist dabei auch dann ein Antreiben der Spannschraube möglich, wenn eine Drehachse des Werkzeugs in einem Winkelversatz mit der Rotationsachse der Spannschraube ist.

In einer anderen bevorzugten Ausführungsform sind radial innen liegende Außenkanten der Vorsprünge konvex gekrümmt. Diese Ausgestaltung vereinfacht die Selbstzentrierung des Werkzeugs auf dem linsenförmigen Schraubenkopf und ermöglicht eine größere Auswinklung zwischen Werkzeug und Spannschraube, also eine größere Winkelabweichung zwischen der Drehachse des Werkzeugs und der Rotationsachse der Spannschraube. Die Handhabung des Werkzeugs, insbesondere bei engen Bedingungen, wird also vereinfacht.

Die Erfindung wird im Folgenden anhand bevorzugter Ausführungsbeispiele in Verbindung mit der Zeichnung näher beschrieben. Hierin zeigen in schematischer Darstellung:
- Fig. 1: eine Schlauchschelle,
- Fig. 2: einen vergrößerten Ausschnitt aus Fig. 1,
- Fig. 3: den Ausschnitt nach Fig. 2 in räumlicher Darstellung,
- Fig. 4: eine Schlauchschelle mit Werkzeug,
- Fig. 5: einen Ausschnitt von der Schlauchschelle mit Werkzeug.

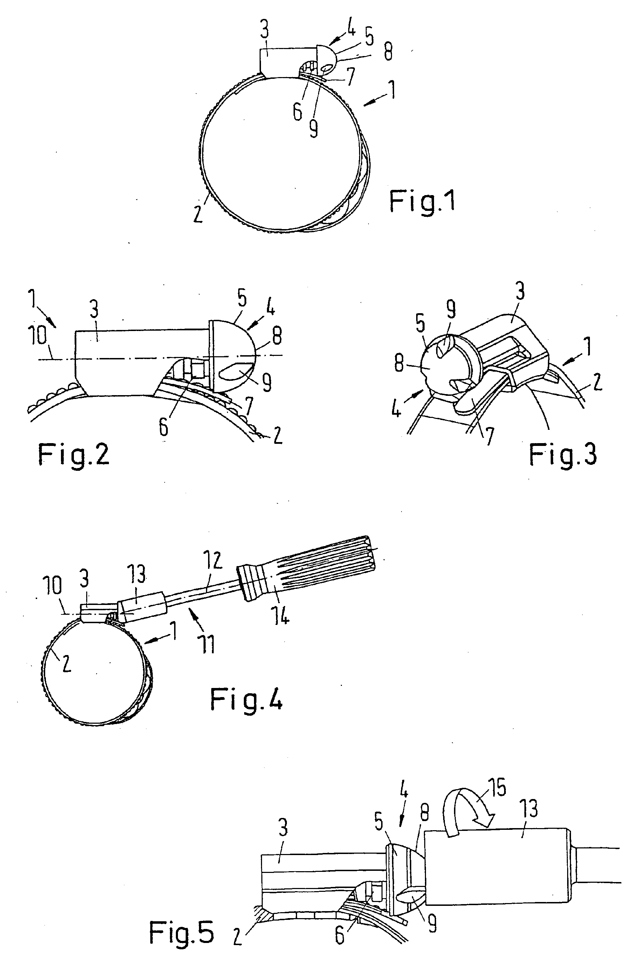

Fig. 1 zeigt eine Schlauchschelle 1 mit einem Schellenband 2, wobei an einem Ende des Schellenbandes 2 ein Gehäuse 3 angeordnet ist. In dem Gehäuse 3 ist eine Spannschraube 4 untergebracht, die einen Schraubenkopf 5 und einen Gewindeschaft 6 aufweist. Ein zweites Ende 7 des Schellenbands 2 ist radial außerhalb des ersten Endes zwischen diesem Ende und dem Gewindeschaft 6 der Spannschraube 4 durch das Gehäuse 3 geführt, wobei ein Gewinde des Gewindeschafts 6 mit einem entsprechenden Gewinde, das an einer Außenseite des Schellenbands 2 ausgebildet ist, in Eingriff steht. Durch Antreiben der Spannschraube 4 wird das zweite Ende 7 dann mehr oder weniger weit aus dem Gehäuse 3 herausgeschoben, wodurch der Durchmesser der Schlauchschelle 1 verändert wird, die Schlauchschelle 1 also gespannt oder entspannt wird.

Eine derartige Schlauchschelle ist soweit bekannt.

Der Schraubenkopf 5 der Spannschraube 4 ist mit einer konvex gewölbten Oberfläche versehen, also linsenförmig ausgebildet, wobei der Schraubenkopf 5 eine kreisförmige Grundfläche aufweist. Im Schraubenkopf 5 sind radial außen liegende Einformungen 9 ausgebildet, wobei die Oberfläche 8 im Bereich eines Zentrums des Schraubenkopfes 5 glatt ausgebildet ist. Die Einformungen 9 können beispielsweise eingeprägt oder eingepresst sein.

In Fig. 2 ist ein Ausschnitt der Schlauchschelle 1 gemäß Fig. 1 dargestellt, in der gleiche Elemente mit gleichen Bezugszeichen versehen sind. Es ist zu erkennen, dass das glatte Zentrum des Schraubenkopfes 5 auf einer Rotationsachse 10 der Spannschraube 4 liegt, wobei die Einformungen 9 radial von der Rotationsachse 10 beabstandet sind.

Fig. 3 zeigt Fig. 2 in räumlicher Darstellung. Die Spannschraube 4 weist bei diesem Ausführungsbeispiel insgesamt drei Einformungen 9 auf, die sternförmig angeordnet sind und zueinander einen konstanten Abstand aufweisen. Die Einformungen 9 sind also gleichmäßig über einen Umfang des Schraubenkopfes 5 der Spannschraube 4 verteilt. Dabei sind die Einformungen 9 derart ausgebildet, dass sie sich konisch nach außen erweitern, also eine relativ große Öffnungsweite und einen relativ schmalen Grund bzw. Boden aufweisen.

In Fig. 4 ist die Schlauchschelle 1 in Verbindung mit einem Werkzeug 11 dargestellt, das zum Antreiben der Spannschraube 4 dient. Das Werkzeug 11 ist in einer Auswinklung gegenüber der Spannschraube 4 dargestellt. Eine Drehachse 12 des Werkzeugs 11 verläuft also in einem Winkel zur Rotationsachse 10 der Spannschraube 4. Diese Auswinklung ist durch die linsenförmige Ausgestaltung des Schraubenkopfes in Verbindung mit den radial außen liegenden Einformungen möglich.

Das Werkzeug 11 weist eine Aufnahme 13 auf, die mit einem Werkzeuggriff 14 verbunden ist. Die Aufnahme 13 ist kreiszylindrisch ausgebildet und weist einen kreiszylindrischen Innenraum auf, der zu einer Stirnseite offen ist, die zur Aufnahme des Schraubenkopfes dient. Dabei muss der Schraubenkopf 5 nicht vollständig aufnehmbar sein. Es ist ausreichend, dass der Schraubenkopf 5 so weit in die Aufnahme 13 einführbar ist, dass im Innenraum angeordnete Vorsprünge in die Einformungen eingreifen können.

In Fig. 5 ist das Werkzeug 11 mit der Spannschraube 4 vergrößert dargestellt. Dabei ist das Werkzeug 11 gegenüber der Spannschraube 4 parallel versetzt. Dieser Versatz wird beim Aufsetzen der Aufnahme 13 auf den Schraubenkopf 5 durch Gleiten der Aufnahme 13 auf der Oberfläche 8 des Schraubenkopfes 5 ausgeglichen. Es erfolgt sozusagen eine Selbstzentrierung der Aufnahme 13 auf dem Schraubenkopf 5. Eine mögliche Rotationsbewegung des Werkzeugs 11 zum Antreiben der Spannschraube 4, die zum Spannen oder Lösen der Schlauchschelle 1 führt, ist durch einen Pfeil 15 symbolisiert.

Durch die Ausgestaltung einer Spannschraube mit einem Schraubenkopf, der radial außerhalb einer Rotationsachse angeordnete Einformungen aufweist, die radial nach außen geöffnet sind, in Verbindung mit einer konvex gewölbten Oberfläche des Schraubenkopfes wird eine Spannschraube bzw. eine Schlauchschelle mit einer derartigen Spannschraube erhalten, die nicht ohne weiteres manipulierbar ist, wobei gleichzeitig eine einfache Handhabung mit einem entsprechenden Spezialwerkzeug gewährleistet ist. Dabei sind weitere Variationen gegenüber dem dargestellten Ausführungsbeispiel denkbar, beispielsweise eine größere Anzahl an Einformungen, eine ungleichmäßige Verteilung der Einformungen über dem Umfang des Schraubenkopfes und eine abweichende Form der Einformungen. Die Aufnahme des Werkzeugs muss dann entsprechend ausgestaltet sein. Das Werkzeug kann auch mehrteilig ausgebildet sein. Beispielsweise kann die Aufnahme als Aufsteckelement (Bit) ausgebildet sein, das z.B. mit Handgriffen, aber auch elektrisch oder pneumatisch angetriebenen Werkzeugmaschinen verbindbar ist.

## Patentansprüche

1. Schlauchschelle (1) mit einem Schellenband und einem Gehäuse, in dem eine Spannschraube angeordnet ist, die einen Schraubenkopf und einen Gewindeschaft aufweist, **dadurch gekennzeichnet, dass** der Schraubenkopf (5) eine vom Gewindeschaft (6) abgewandte, konvex gewölbte Oberfläche (8) aufweist, in der mindestens drei Einformungen (9) vorgesehen sind.

2. Schlauchschelle nach Anspruch 1, **dadurch gekennzeichnet, dass** ein Zentrum der Oberfläche (8) glatt ausgebildet ist.

3. Schlauchschelle nach einem der Ansprüche 1 oder 2, **dadurch gekennzeichnet, dass** die Einformungen radial verlaufen.

4. Schlauchschelle nach einem der Ansprüche 1 bis 3,
**dadurch gekennzeichnet, dass** die Einformungen sternförmig angeordnet sind, insbesondere gleiche Abstände zueinander aufweisen.

5. Schlauchschelle nach einem der Ansprüche 1 bis 4,
**dadurch gekennzeichnet, dass** sich die Einformungen (9) konisch nach außen erweitern.

6. Spannschraube, insbesondere für eine Schlauchschelle der Ansprüche 1 bis 5, die einen Schraubenkopf und einen Gewindeschaft aufweist, **dadurch gekennzeichnet, dass** der Schraubenkopf (5) eine vom Gewindeschaft (6) abgewandte, konvex gewölbte Oberfläche (8) aufweist, in der mindestens drei Einformungen (9) vorgesehen sind.

7. Spannschraube nach Anspruch 6, **dadurch gekennzeichnet, dass** ein Zentrum der Oberfläche (8) glatt ausgebildet ist.

8. Spannschraube nach einem der Ansprüche 6 oder 7,
**dadurch gekennzeichnet, dass** die Einformungen (9) sternförmig angeordnet sind.

9. Spannschraube nach einem der Ansprüche 6 bis 8, **dadurch gekennzeichnet, dass** sich die Einformungen (9) konisch nach außen erweitern.

10. Werkzeug zum Spannen einer Schlauchschelle nach einem der Ansprüche 1 bis 5 und/oder zum Antreiben einer Spannschraube nach einem der Ansprüche 6 bis 9, **dadurch gekennzeichnet, dass** das Werkzeug (11) eine Aufnahme (13) mit einem zu einer Stirnseite hin offenen Innenraum aufweist, in dem mindestens drei radial nach innen gerichtete Vorsprünge angeordnet sind.

11. Werkzeug nach Anspruch 10, **dadurch gekennzeichnet, dass** ein Innendurchmesser des Innenraums auf einen Außendurchmesser des Schraubenkopfes (5) und eine Anzahl und eine Form der Vorsprünge an eine Anzahl und eine Form der Einformungen (9) des Schraubenkopfes (5) angepasst sind.

12. Werkzeug nach einem der Ansprüche 10 oder 11, **dadurch gekennzeichnet, dass** radial innen liegende Außenkanten der Vorsprünge parallel zueinander verlaufen.

13. Werkzeug nach einem der Ansprüche 10 oder 11, **dadurch gekennzeichnet, dass** radial innen liegende Außenkanten der Vorsprünge konvex gekrümmt sind.
